(19) Europäisches Patentamt
European Patent Office
Office européen des brevets

(11) **EP 2 375 719 A1**

(12) **EUROPEAN PATENT APPLICATION**

(43) Date of publication:
**12.10.2011 Bulletin 2011/41**

(51) Int Cl.:
**H04N 1/60** (2006.01)

(21) Application number: **10290192.3**

(22) Date of filing: **09.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Thomson Licensing**
**92130 Issy-les-Moulineaux (FR)**

(72) Inventors:
• **Stauder, Jürgen**
**92443 Issy-les-Moulineaux Cedex (FR)**

• **Poree, Corinne**
**92443 Issy-les-Moulineaux Cedex (FR)**
• **Morvan, Patrick**
**92443 Issy-les-Moulineaux Cedex (FR)**

(74) Representative: **Browaeys, Jean-Philippe**
**Technicolor**
**1-5 rue Jeanne d'Arc**
**92130 Issy-les-Moulineaux (FR)**

(54) **Color gamut mapping method having one step preserving the lightness of the cusp colors**

(57)    A method comprises a cusp-oriented step in which a source color (V) is mapped into an intermediate mapped color (V') having the same hue (H' = H) and the same chroma (C' = C) as the source color, such that any source color (V) having the same lightness (L) and same chroma (C) as a source cusp color is mapped to an intermediate mapped color having the lightness (L') of a destination cusp color, said source and destination cusp colors being respectively the most saturated colors in the source or destination color gamut, respectively, of same hue as said source color (V).

Fig.4

**Description**

The invention concerns a method for mapping colors of a source color gamut into a destination color gamut that is adapted to the cusps of the source color gamut, preferably in a way that the saturation of colors is preserved.

One important step in color conversion is the so-called "gamut mapping". The task of gamut mapping is to map the colors belonging to a source color gamut (for example the extended color gamut of a film) into a destination color gamut (for example the color gamut of a standard television monitor). Morovic and Luo give a comprehensive overview on gamut mapping algorithms. Montag and Fairchild as well as Zolliker present comprehensive comparisons and evaluate different approaches. See notably the following references:

- J. Morovic and M. R. Luo, "The Fundamentals of Gamut Mapping: A Survey", Journal of Imaging Science and Technology, 45/3:283-290, 2001.
- Montag E. D., Fairchild M. D, "Psychophysical Evaluation of Gamut Mapping Techniques Using Simple Rendered Images and Artificial Gamut Boundaries", IEEE Trans. Image Processing, 6:977-989, 1997.
- P. Zolliker, M. DAtwyler, K. Simon, On the Continuity of Gamut Mapping Algorithms, Color Imaging X: Processing, Hardcopy, and Applications. Edited by Eschbach, Reiner; Marcu, Gabriel G. Proceedings of the SPIE, Volume 5667, pp. 220-233, 2004.

Gamut mapping changes image colors, notably according device constraints have that have to be met. There is no "zero error" or "no degradation" gamut mapping method. Gamut mapping impacts an image as artwork. Gamut mapping for automatic color conversion has therefore to be designed considering artistic requirements or it should be a tool used by the colorist among other.

Gamut mapping usually requires a gamut boundary description (GBD) that defines the boundary surface of a color gamut in a color space. GBDs consist often in explicit, generic 3D representations such as triangle meshes or volume models.

There are three groups of known methods for calculating a GBD. So-called "colorant space" methods require device-dependent and device-independent color coordinates as input. The GBD is calculated by using device dependent coordinates with either minimum or maximum values, see R. J. Rolleston, "Visualization of colorimetric calibration", In Proceedings of SPIE, volume 1912, pages 299-309, 1993. Convex methods such as the convex hull method require as input a more or less exhaustive set of device independent colors belonging to the color gamut. The assumption is that a convex hull includes all these colors. Non-convex methods such as alpha shapes and discrete flow complex need the same input data but allow a degree of non-convexity.

The **"cusps" of a color gamut** is the set of colors, where each of these colors has a larger chroma compared to all other colors in the same constant-hue LC-leaf of the 3D color space, wherein this constant-hue leaf expands along a lightness (L) axis and a chroma (C) axis. When the color gamut is described by a GBD, "cusps" are "singular" points ("vertices") or lines ("edges") on the boundary surface that limits a color gamut. Cusp points are generally defined as the in-gamut color of maximum chroma in a given constant-hue LC-leaf.

When trying to define a color gamut mapping method (or algorithm : "GMA") from colors inside a source color gamut (having its own source cusp points or source cusp lines) into a destination color gamut (having corresponding own destination cusp points or destination cusp lines), in order to take advantage of the whole range of colors in the destination gamut, it is preferred to define the GMA as mapping a source cusp point/line into its corresponding destination cusp point/line.

The cusp clipping color gamut mapping method is one of the so-called chroma clipping or chroma mapping methods, reviewed by E. D. Montag, M. D. Fairchild, C. F. Carlson, in "Gamut mapping: Evaluation of chroma clipping techniques for three destination gamuts", IS&T/SID Sixth Color Imaging Conference, Scottsdale, 57-61, 1998. The basic method is "straight clipping" where hue and lightness are preserved and all out-of-gamut colors are mapped or clipped into the destination gamut using straight, horizontal mapping trajectories that all aim so-called anchor points lying on the lightness axis. "Straight clipping" reduces only the chroma of colors leading to reduced saturation in resulting images. In another method called "node clipping", the mapping trajectories do not exhibit constant lightness, but aim all a single anchor point lying on the lightness axis at $L^*=50$. "Node clipping" reduces chroma and changes lightness of colors leading to reduced saturation and reduced contrast in resulting images. In "cusp clipping", the anchor points are lying on the lightness axis but have the same lightness as the gamut cusp in the hue leaf of the color to be mapped.

The so-called **"GCUSP"** color mapping algorithm is intended to be a direct implementation of former review results : see Morovic J. and Luo M. R., "Cross-media Psychophysical Evaluation of Gamut Mapping Algorithms", Proc. AIC Color 97 Kyoto, 2:594-597, 1997. It consists of an initial chroma-dependent lightness compression followed by CUSP mapping. The degree of lightness compression is high at the achromatic axis ($C^*=0$) and is smoothly decreased as chroma increases.

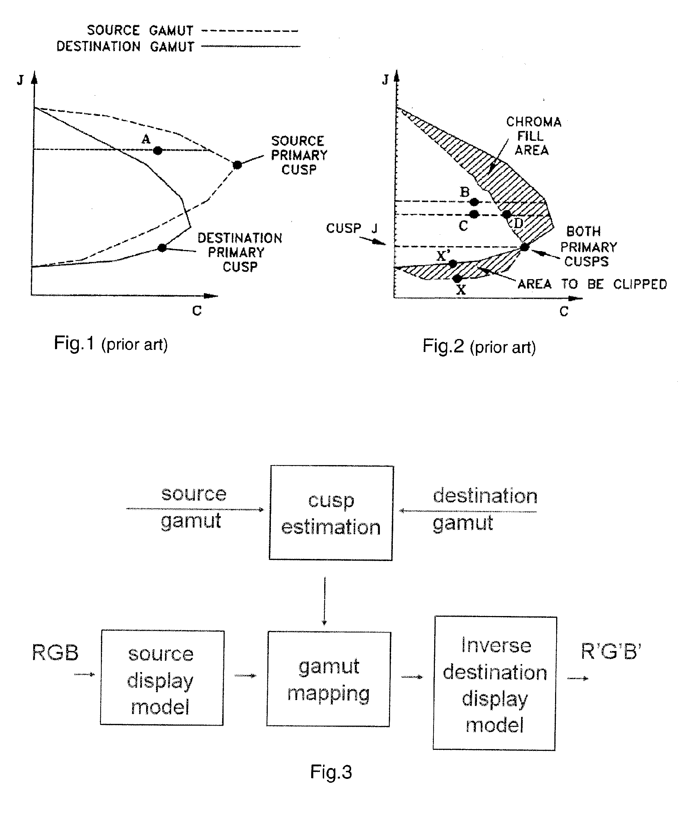

In reference to the appended figures 1-2, US2007/236761 discloses a color gamut mapping method in which, possibly after application of a lightness rescaling process (already performed in figure 1), the colour gamut mapping method is applied according to the following steps :

1) the source GBD, defined in a given constant-hue JC-leaf, is mapped into a destination GBD of the same given JC-leaf, such that the source primary cusp point is mapped into the destination primary cusp point: see figure 1 . Therefore, in this first step (referenced 804 in document), any color A inside the source GBD (figure 1) is mapped into a color B inside or outside the destination GBD (figure 2 where B is inside). In this first step, a change of chroma is always performed for at least one color inside the source GBD.

2) Then, a "chroma dependent lightness compression" is applied, transforming color B above into color C : see reference 805 in document.

3) Then, a chroma expansion step is applied, transforming color C above into color D : see reference 806 in document.

One application area of color conversion is video content production and post-production. For example, a video content need to be converted into a specific version of the video content for cinema, television, or internet. One ou a plurality of color versions can be prepared by manual color correction or/and by application of gamut and tone mapping algorithms. Among the requirements for tone and gamut mapping are :

- preservation of color neighborhood and order, absence of color banding and false contours, in order, notably, to prevent from incoherent reproduction of grey and color ramps;
- continuity of color and absence of visible quantization or clipping errors, in order, notably, to prevent from banding and false contours ;
- separate control for lightness, hue and saturation for keeping the full artistic control on how colors are modified, and for allowing the formulation of a higher, semantic level of artistic intents.

One drawback of the cusp clipping color gamut mapping methods, of the "GCUSP" color mapping algorithm, or of the color gamut mapping method disclosed in US2007/236761 is that they do not allow a semantic level of artistic intents which is high enough, notably because they do not provide separate control for lightness, hue and saturation.

An object of the invention is to avoid the aforementioned drawback, by proposing a cusp color gamut mapping method where the first step does not involve variation of chroma, but only variation of lightness.

For this purpose, the subject of the invention is a method of color gamut mapping, in a visual mapping color space having axes for lightness, hue and chroma, source colors of a source color gamut into targets colors in a destination color gamut, comprising a cusp-oriented step in which a source color is mapped into an intermediate mapped color having the same hue and the same chroma as said source color, such that any source color having the same lightness and same chroma as a source cusp color is mapped to an intermediate mapped color having the lightness of a destination cusp color, said source and destination cusp colors being respectively the most saturated colors in the source or destination color gamut, respectively, of same hue as said source color.

The cusp-oriented color gamut mapping method according to the invention is notably applicable to professional color processing software, when the colorist needs to be free to choose any chroma variations, instead of depending of an automatic cusp mapping as in US2007/236761. Thank to the invention, as at least one step of the color gamut mapping is limited to variations of the lightness with chroma and hue conservation, the colorist is totally free to choose any chroma variations in a next step of color processing. A high semantic level of artistic intents is then offered to the colorist, notably because a separate control for lightness, hue and saturation is provided.

The main feature differentiating the invention from US2007/236761 is that, instead of performing a cusp mapping as in US2007/236761 (A-> B step 804, even including the B->C step 805) inferring variations both of lightness and of chroma, the invention propose a cusp-oriented step where only the lightness varies.

Moroever, thank to a specific algorithm that allows the detection of the source and destination cusp colors, an optional improvement is obtained over US2007/236761, as the actual cusp may be considered, instead of a linear interpolation of the cusp as in US2007/236761. This is a major advantage when the lines along which the cusp colors are distributed are not straight.

Preferably, the cusp-oriented step is characterized in that any source color is mapped to an intermediate mapped color along a mapping line that is parallel to the lightness axis of the mapping color space, such that the lightness of the intermediate mapped color is related to the lightness of the source color according to a tone mapping function, the tone mapping function being defined in the following manner:

- For all colors inside the source color gamut having the same hue as the source color, the source color with the lowest lightness is determined and the source color with highest lightness is determined ;
- For all colors inside the destination color gamut having the same hue as the source color, the destination color with lowest lightness is determined and the destination color with highest lightness is determined;

- Said tone mapping function is a monotonous function that maps the lightness of said source color to a mapped lightness of an intermediate mapped color such that the intensities of said source colors with lowest and highest lightness are mapped to the intensities of said destination colors with lowest and highest lightness, respectively.

Preferably, the source or destination cusp color, respectively, is determined from the source or destination gamut, respectively, using a wireframe gamut boundary descriptions that links gamut boundary colors by a wireframe, and that links cusp colors by a closed polygon, the polygone being defined by cusp vertices, each cusp vertex having a previous cusp vertex and a next cusp vertex, the method being characterized by the following steps:

a. A first cusp vertex is detected being the vertex of the gamut boundary description having the highest saturation;
b. A current cusp vertex is set to said first cusp vertex;
c. Neighboring vertices of the current vertex color are determined being a number of vertex of the gamut boundary description with smallest distance to the current cusp vertex, the distance is measured over said wireframe;
d. Each neighboring vertex out of said neighboring vertices is a candidate for a next cusp vertex, for each candidate next cusp vertex a quality criterion is calculated that is based on at least one out of: high saturation of the candidate next cusp vertex; local lightness constancy of the cusp polygon; strong hue increase between neighboring cusp vertices along the cusp polygon, large distance between neighboring cusp vertex; high surface curvature angles at the cusp polygon;
e. A next cusp vertex is detected being the candidate having the highest quality criterion;
f. If the cusp polygon is not finished, the current cusp vertex is set to the next cusp vertex and the iteration continues with step c.

Preferably, the cusp-oriented color gamut mapping method according to the invention comprises a post mapping step in which the intermediate mapped color is post-mapped to a target color inside the destination gamut using a known color gamut mapping method.

The invention will be more clearly understood on reading the description which follows, given by way of non-limiting example and with reference to the appended figures in which:

- Figures 1 and 2, already mentioned, illustrate a color gamut mapping method according to the prior art;
- Figure 3 illustrates the gamut mapping framework of a specific embodiment of the invention;
- Figure 4 illustrates the color gamut mapping method according to this specific embodiment in a constant-hue LC-leaf, and, on the right part, the mapping function of this specific embodiment;
- Figure 5 is a schematic diagram of the whole color gamut mapping method according to this specific embodiment, with the optional final post-mapping step;
- Figures 6, 7 and 8 show representative results of the color gamut mapping method according to this specific embodiment, for perfect standard gamuts (Figure 6), for measured additive gamuts (Figure 7) and for subtractive gamuts (Figure 8).

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage. Other hardware, conventional and/or custom, may also be included.

Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

A specific embodiment of the invention will now be described in reference to the gamut mapping framework shown in figure 3. It includes classical color management tools such as source and destination display models. New tools are notably the cusp estimation and the gamut mapping itself, which are described below.

The color gamut mapping algorithm requires metadata about the destination of the image (destination color gamut) and the source of the image (source color gamut). These metadata are represented explicitly using a 3D triangle mesh, each color of this mesh being represented by a vertex V. The metadata are generated by a convex hull method in CIEXYZ color space but color gamut mapping itself is carried out in CIELAB color space.

$1^{\underline{st}}$ step : Estimation of the cusp of a color gamut :

Cusp estimation is simple as soon as the GBD is determined by a so-called "colorant space" method. The cusp colors of the gamut can be identified by requiring two colorant coordinates at minimum and one at maximum value. When the GBD is generated by a well-known convex method, the cusp needs to be estimated. We use a simple incremental search algorithm using the following steps:

1. A current cusp vertex is detected being the vertex of the gamut boundary description having the highest saturation;
2. For all neighboring vertices in the neighborhood of the current cusp vertex, a quality criterion (definition see further down) is calculated; the neighborhood being all vertices that are linked to the current cusp vertex by an edge of a triangle;
3. A next cusp vertex is detected being the vertex of the neighborhood having the highest quality criterion;
4. If the next cusp vertex satisfies a stop criterion (definition see further down), the analysis is finished; if not, the next cusp vertex is overtaken as current cusp vertex and the procedure continues at step no. 2 above.

The mentioned **quality criterion C** calculated in this embodiment for a neighboring vertex V is a combination of five sub criteria. The first four sub criteria are : a saturation criterion, a lightness similarity criterion, a hue angle increase criterion, a collinearity criterion, and a so-called "surface curvature" criterion.

The **saturation criterion** $C_s$ aims to find most saturated cusp vertices. It is based on the saturation $C* = \sqrt{a*^2 + b*^2}$ of the neighboring vertex. The saturation is the chroma with a* and b* being the coordinates of the neighboring vertex in CIE 1976 L*a*b* color space:

$$V = \begin{pmatrix} L* \\ a* \\ b* \end{pmatrix}.$$

In order to calculate the saturation criterion $C_s$, additionally the distance

$$D = V - \check{V} = \sqrt{\left(L*-\hat{L}*\right)^2 + \left(a*-\hat{a}*\right)^2 + \left(b*-\hat{b}*\right)^2}$$

between the neighboring vertex $v$ and the current vertex $\hat{v}$ is taken into account. The final saturation criterion is then :

$$C_S = \frac{C*\left(1 + D/c_2\right)}{c_1}$$ , with constant parameters $c_1$ and $c_2$

The **lightness similarity criterion** $C_l$ aims to cusp colors having a similar lightness along the cusp. It is based on the difference between the intensities of the neighboring vertex $L*$ and the current vertex $L*$ according to

$$C_l = 1 - \frac{\left(L*-\hat{L}*\right)^2}{\left(c_3\right)^2}\left(1 + D/c_2\right).$$

The **hue angle increase criterion** $C_H$ aims to cusp colors that increase in hue in order to efficiently result in a closed and smooth cusp polygon. It is based on the hue angle $\alpha_H$ of the neighboring vertex. The hue angle $\alpha_H$ is the angle in degrees in the L*=0 plane between the a* axis and the vector defined by the a*,b* coordinates of the neighboring vertex. In a corresponding manner, the hue angle $\hat{\alpha}_H$ of the current vertex is defined. The hue angle difference criterion

$C_H$ is calculated according to

$$C_H = \frac{\alpha_H - \bar{\alpha}_H}{c_4}$$

with $C_4$ a constant parameter.

The **collinearity criterion** $C_D$ aims to cusp colors that build a smooth shaped cusp polygon. It is based on a polygon direction difference involving the neighboring vertex $v$, the current cusp vertex $\hat{v}$ and the previous cusp vertex $v'''$ that has been detected before the current cusp vertex. Two direction vectors $d = v - \hat{v}$ and $\hat{d} = \hat{v} - v'''$ are calculated and the polygon direction difference angle $\alpha_D = \angle\{d;\hat{d}\}$ is calculated in degrees showing the change of direction in 3D color space of the cusp polygon. From this angle, the polygon direction difference criterion $C_D = 1 - \alpha_D / c_5$ is calculated with $c_5$ a constant parameter.

The fifth ctiterion is the **curvature criterion** $C_C$ that aims to cusp vertices that lie on the sharp rim of most saturated colors of a color gamut. It is based on a difference of surface normals $n_i;n_r$ measured on the "left" and "right" side of the direction vector $d = v - \hat{v}$. A surface curvature angle $\alpha_C = \angle\{n_i;n_r\}$ is calculated in degrees reflecting the sharpness of the gamut rim. From this angle, the curvature criterion $C_C = 1 - c_6/\alpha_D$ is calculated with $c_6$ a constant parameter.

The mentioned **quality criterion** C is then calculated for a neighboring vertex V is finally calculated by a weighted sum of the above five sub criteria, according to the formula:

C = $c_S C_S + c_H C_H + c_I C_I + c_D C_D + c_C C_C$, with weights $c_S$, $c_H$, $c_I$, $c_D$ and $c_C$.

Typical values are $c_S$=0.5, $c_I$=1.0, $c_H$=0.7, $c_D$=0.4 and $c_C$=0.5.

The above mentioned stop criterion evaluates two characteristics of the latest detected cusp vertex, each of them is sufficient to indicate the successful detection of the gamut cusp and the end of the algorithm:

- either, the latest detected cusp vertex is identical with the first cusp vertex,
- or the latest detected cusp vertex has an associated hue angle that is larger than the hue angle of the first cusp vertex augmented by 360 degrees.

2<sup>nd</sup> step : definition of a cusp-oriented tone mapping function :

The cusp information of the first step above is then used for tone mapping according to an embodiment of the invention. The GCUSP algorithm for example uses the destination color gamut cusp lightness to choose the anchor point, the ending point of a mapping trajectory. In opposite to GCUSP, so-called cusp-to-cusp mapping algorithms adapt the entire mapping trajectory in a way that source primary cusp colors are mapped to destination primary cusp colors. In opposite to known cusp-to-cusp mapping, an isolated tone mapping operator is defined that is based on the following characteristics:

- Keeping hue and chroma constant to preserve the artistic intent;
- Lightness mapping towards the destination cusp lightness;
- the lightness mapping using a chroma dependency factor.

The tone mapping is defined for each constant-hue LC-leaf of the source color gamut. In each leaf, the cusp colors of the source and destination gamuts are identified using the method of the first step above. Futhermore, the black and white points ot the two gamuts are supposed to be known. A tone mapping function $= f(\cdot)$ is then defined according to the following four criteria.

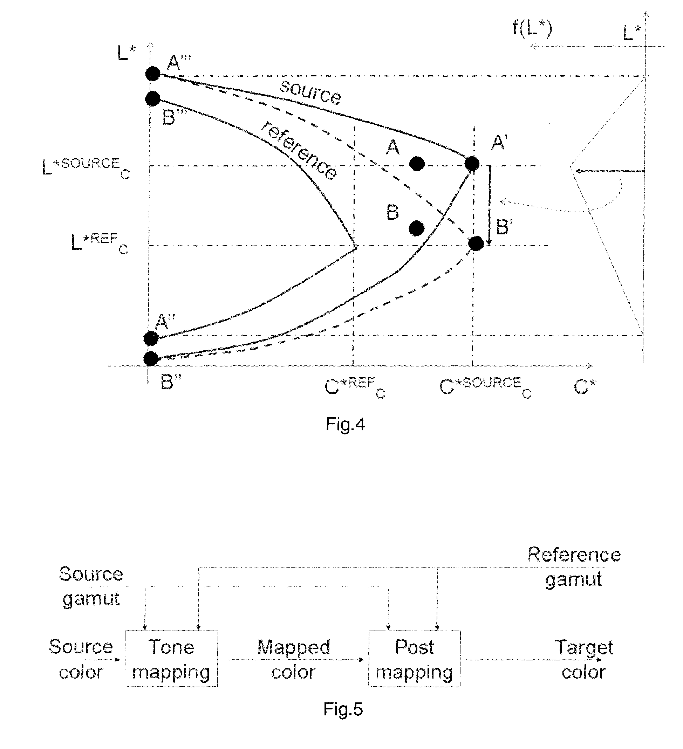

First criterion: A color having the lightness $L*_{CUSP}^{SOURCE}$ of the cusp of the source gamut is mapped to a color having the lightness $L*_{CUSP}^{DEST}$ as the cusp of the destination gamut. According to this first criterion, the tone mapping function satisfies: $f\left(L*_{CUSP}^{SOURCE}\right) = L*_{CUSP}^{DEST}$. See on figure 4, point A' is tone-mapped into point B'.

Second criterion: A color having the lightness $L*_{BLACK}^{SOURCE}$ of the black point of the source gamut is mapped to a color having the lightness $L*_{BLACK}^{DEST}$ as the black point of the destination gamut. According to this second criterion, the tone mapping function satisfies: $f\left(L*_{BLACK}^{SOURCE}\right)=L*_{BLACL}^{DEST}$. See on figure 4, point A" is tone-mapped into point B".

<u>Third criterion:</u> A color having the lightness $L*_{WHITE}^{SOURCE}$ as the white of the source gamut is mapped to a color having the lightness $L*_{WHITE}^{DEST}$ of the white point of the destination gamut. According to this third criterion, the tone mapping function satisfies $f\left(L*_{WHITE}^{SOURCE}\right)=L*_{WHITE}^{DEST}$. See on figure 4, point A''' is tone-mapped into point B'''.

<u>Forth criterion:</u> The tone mapping functions $f_1(\bullet)$ and $f_2(\bullet)$ of two colors having the chroma values $c_1*$ and $c_2*$, respectively, and having both the same lightness $L_1*=L_2*L*$, satisfy $\dfrac{f_1(L*)}{f2(L*)}=\dfrac{C*_1}{C*_2}$. This fourth condition ensures that colors with small chroma values are less mapped than colors with large chroma values. In this way, grey ramps near the L* axis are preserved. See on figure 4, point A is tone-mapped into point B.

For the tone mapping function, we use a piecewise linear model according to $f(L*)=aL*$ with "a" being a piecewise linear lightness factor defined as follows:

$$a = bc\frac{L*_{CUSP}^{DEST}}{L*_{CUSP}^{SOURCE}}+(1-bc)\ ,$$

and "b" being a piecewise linear weight that is defined as follows

$$b=\begin{cases}\dfrac{L*-L*_{BLACK}^{SOURCE}}{L*_{CUSP}^{SOURCE}-L*_{BLACK}^{SOURCE}} & if & L*\le L*_{CUSP}^{SOURCE}\\[2ex]\dfrac{L*_{WHITE}^{SOURCE}-L*}{L*_{WHITE}^{SOURCE}-L*_{CUSP}^{SOURCE}} & if & L>L*_{CUSP}^{SOURCE}\end{cases}$$

and "c" being piecewise linear chroma dependency factor defined as follows:

$$c=\min\left\{1\quad;\quad\frac{C*}{C*_{CUSP}^{SOURCE}}\right\}$$

with C* the chroma of the color to be mapped and $C*_{CUSP}^{SOURCE}$ the chroma of the source gamut cusp.

<u>3<sup>rd</sup> step : Application of tone mapping function :</u>

The tone mapping function $f(L*)=aL*$ is then applied to the colors of the source color gamut, each defined by their color space coordinates as follows : $V=\begin{pmatrix}L*\\a*\\b*\end{pmatrix}$.

According to the invention, the mapping is applied to the L* coordinate only such that the resulting, mapped color has the coordinates

$$V' = \begin{pmatrix} L'* = f(L*) \\ a'* = a* \\ b'* = b* \end{pmatrix}.$$

Figure 4 shows an example for the tone mapping function for C=C*SOURCE_C, where C*SOURCE_C is the chroma of the cusp point of the source color gamut, using the piecewise linear model. If a color A has the same lightness as the source cusp but a smaller chroma (C < C*SOURCE_C), it is mapped onto a color B. We can see that the lightness is tone mapped into the direction of the destination cusp lightness. The amount of tone mapping is notably controlled by the lightness ratio of destination and source cusps (ratio of destination cusp L* and source cusp L*) as well as by the chroma of the color A compared to the chroma of the source cusp (chroma dependency factor).

$4^{th}$ optional step : tone mapping with additional post mapping

The mapped color V' is finally mapped to a target color V" in a way that the target color is inside the gamut of the destination color gamut and can be displayed on a target display having the destination gamut as color gamut. When this optional step is performed, the mapped color V' which is obtained at the end of the previous step is therefore an intermediate mapped color.

In this optional step, and in reference to figure 5, each intermediate mapped color $V' = \begin{pmatrix} L'* \\ a'* \\ b'* \end{pmatrix}$ is post-

mapped onto a target color in direction to a so-called anchor point. In the specific embodiment of the invention, we use the color $V_0 = \begin{pmatrix} L_0* = L'* \\ a_0* = 0 \\ b_0* = 0 \end{pmatrix}$ as the anchor point. Straight lines are chosen as trajectories for the pots-mapping step.

The post-mapping can be described as a modification of distance K between the intermediate mapped color V' and the anchor point into the distance K' between the target color V" and the anchor point. In this case known algorithms can be used for mapping, such as gamut compression or gamut clipping. In this example of straight lines being vertical to the lightness axis, the lightness is not changed by post-mapping.

$5^{th}$ step : quality evaluation of the cusp-oriented color gamut mapping method according to the invention:

An original, reference image being chosen, all gamut mapped images are compared to the respective original, reference image in a side by side manner. Gamut mapped images are obtained by gamut mapping colors of the original images. In order to exclude display characterization errors, each gamut mapped image is presented in butterfly mode side by side with the original, reference image on a single Wide Color Gamut (WCG) display.

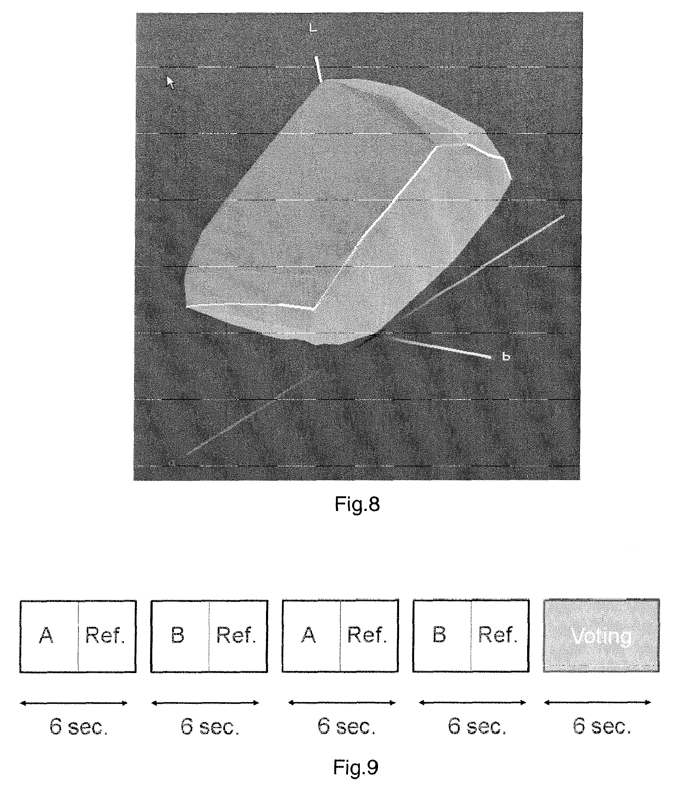

Each gamut mapped image is judged using an absolute quality scale. There is an issue when using an absolute quality scale for evaluation of a single gamut mapped image (in butterfly presentation together with the original image). The judgment will be biased due to the large degradation of colors of gamut mapping caused by the difference of color gamuts between source and destination display. This bias depends on the employed displays and will lower the generality of results. In order to focus the attention of the observer to the level of quality on the destination display, two butterfly images generated by two different gamut mapping methods are presented in temporal order according to figure 9. As a consequence, the observer is aware of the difference of quality between different gamut mapping methods and is less biased by the difference between source and destination color gamuts.

Fifteen persons were invited to the test having general skills in image processing but no specific skills in color science. We conducted 120 pair comparisons for each person involving ten test images. In order to be able to analyze the quality to the mapped color according to different aspects of color, we ask the test persons to judge the fidelity of either hue, saturation, skin color or white temperature.

The cusp estimation algorithm has been tested for a series of gamuts including film projection, digital projection and direct view display devices. The weights for saturation estimation were chosen as follows for all experiments:

Saturation criterion =0.5; Lightness similarity criterion =1.0; Hue angle increase criterion: $C_H$ = 0.7; Collinearity criterion: $c_D$=0.4; Curvature criterion: $c_C$ = 0.5.

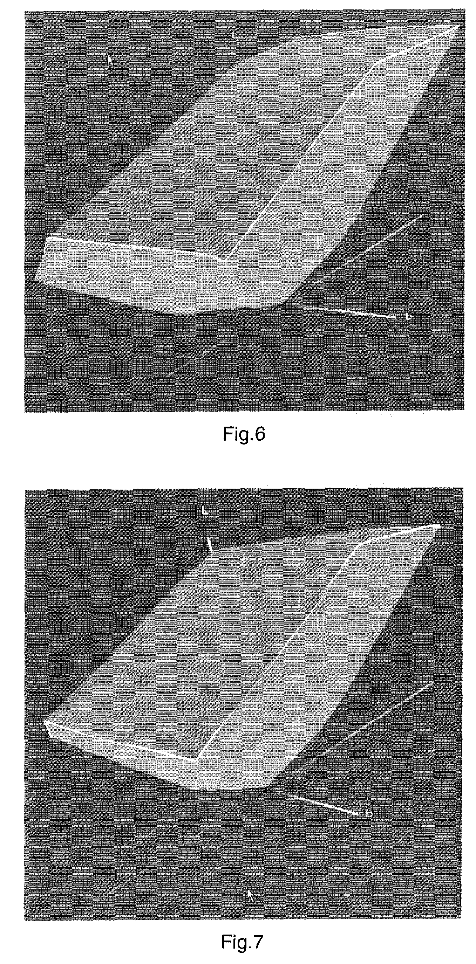

Figures 6, 7 and 8 show representative results. The performance is satisfying for perfect standard gamuts (Figure 6), for measured additive gamuts (Figure 7) and even for subtractive gamuts (Figure 8).

Table 1 below shows the mean scores and standard deviations obtained by the psycho-physical evaluations for hue and saturation of different gamut mapping methods including the cusp-oriented color gamut mapping method according to the invention. It can be seen that linear scaling methods do not perform well. The reason is too much loss of saturation. Clipping and non-linear scaling are close and better preserve saturation. Additionally, non-linear scaling preserves image details with respect to clipping. Best method is clearly the new cusp-to-cusp mapping. It preserves saturation of most brilliant colors while lightness changes are tolerated. The standard deviation shows that results are clear (standard variation lower than 0.4) for straight linear scaling (bad score of 1.93) and the new cusp-to-cusp mapping (good score of 2.73). Less clear (standard deviations larger than 0.6) are the straight clipping and non-linear scaling that sometimes produce good and sometimes bad results. The individual scores with respect to hue and saturation are very close to each other. This shows that it is difficult to independently judge these color aspects in a test with limited observation time (6 seconds per comparison plus 6 seconds for voting).

## Table 1

| Gamut mapping method | Straight clipping | Straight linear scaling in source gamuts | Straight non-linear scaling in source gamuts | New cusp-oriented tone mapping and straight non-linear scaling in source gamut |
|---|---|---|---|---|
| **Score** | 2.40 | 1.93 | 2.30 | 2.73 |
| **Std. dev.** | 0.63 | 0.39 | 0.61 | 0.33 |

In comparison to known methods (clipping, linear scaling and non-linear scaling), we can conclude that the cusp-oriented color gamut mapping method according to the invention performed significantly better, notably for images with saturated colors.

The cusp-oriented color gamut mapping method according to the invention is notably applicable to professional color processing software, when the colorist needs to be free to choose any chroma variations, instead of depending of an automatic cusp mapping as in US2007/236761. Thank to the invention, as at least the first step of the color gamut mapping is limited to variations of the lightness with chroma conservation, the colorist is totally free to choose any chroma variations in a next step of color processing. A high semantic level of artistic intents is then offered to the colorist, notably because a separate control for lightness, hue and saturation is provided.

While the present invention is described with respect to a particular embodiment, it is understood that the present invention is not limited to this embodiment. The present invention as claimed therefore includes variations from this embodiment described herein, as will be apparent to one of skill in the art.

It is to be further understood that, because some of the constituent system components and methods depicted in the accompanying drawings are preferably implemented in software, the actual connections between the system components or the process function blocks may differ depending upon the manner in which the invention is implemented.

**Claims**

1. Method of color gamut mapping, in a visual mapping color space having axes for lightness (L), hue (H) and chroma (C), source colors (V) of a source color gamut into targets colors (V") in a destination color gamut, comprising a cusp-oriented step in which a source color (V) is mapped into an intermediate mapped color (V') having the same hue (H' = H) and the same chroma (C' = C) as said source color, such that any source color (V) having the same lightness (L) and same chroma (C) as a source cusp color is mapped to an intermediate mapped color having the lightness (L') of a destination cusp color, said source and destination cusp colors being respectively the most saturated colors in the source or destination color gamut, respectively, of same hue as said source color (V).

2. Method of color gamut mapping according to claim 1 wherein the cusp-oriented step is **characterized in that** any source color is mapped to an intermediate mapped color along a mapping line that is parallel to the lightness axis of the mapping color space, such that the lightness (L') of the intermediate mapped color is related to the lightness (L) of the source color according to a tone mapping function $L' = f(L)$, the tone mapping function being defined in the following manner:

• For all colors inside the source color gamut having the same hue as the source color, the source color with the lowest lightness is determined and the source color with highest lightness is determined ;
• For all colors inside the destination color gamut having the same hue as the source color, the destination color with lowest lightness is determined and the destination color with highest lightness is determined;
• Said tone mapping function is a monotonous function that maps the lightness of said source color to a mapped lightness of an intermediate mapped color such that the intensities of said source colors with lowest and highest lightness are mapped to the intensities of said destination colors with lowest and highest lightness, respectively;

3. Method of color gamut mapping according to claim 2 where the source or destination cusp color, respectively, is determined from the source or destination gamut, respectively, using a wireframe gamut boundary descriptions that links gamut boundary colors by a wireframe, and that links cusp colors by a closed polygon, the polygone being defined by cusp vertices, each cusp vertex having a previous cusp vertex and a next cusp vertex, the method being **characterized by** the following steps:

a. A first cusp vertex is detected being the vertex of the gamut boundary description having the highest saturation;
b. A current cusp vertex is set to said first cusp vertex;
c. Neighboring vertices of the current vertex color are determined being a number of vertex of the gamut boundary description with smallest distance to the current cusp vertex, the distance is measured over said wireframe;
d. Each neighboring vertex out of said neighboring vertices is a candidate for a next cusp vertex, for each candidate next cusp vertex a quality criterion is calculated that is based on at least one out of: high saturation of the candidate next cusp vertex; local lightness constancy of the cusp polygon; strong hue increase between neighboring cusp vertices along the cusp polygon, large distance between neighboring cusp vertex; high surface curvature angles at the cusp polygon;
e. A next cusp vertex is detected being the candidate having the highest quality criterion;
f. If the cusp polygon is not finished, the current cusp vertex is set to the next cusp vertex and the iteration continues with step c.

4. Method of color gamut mapping according to any one of claims 1 to 3 comprising a post mapping step in which the intermediate mapped color is post-mapped to a target color inside the destination gamut using a known gamut mapping method.

Fig.1 (prior art)

Fig.2 (prior art)

Fig.3

$f(L^*)$      $L^*$

$L^*$

A'''

source

B'''

reference

$L^{*SOURCE}_C$

A

A'

B

B'

$L^{*REF}_C$

A''

B''

$C^{*REF}_C$     $C^{*SOURCE}_C$     $C^*$

Fig.4

Reference
gamut

Source
gamut

Source → Tone → Mapped → Post → Target
color   mapping   color   mapping   color

Fig.5

12

Fig.6

Fig.7

Fig.8

| A | Ref. | B | Ref. | A | Ref. | B | Ref. | Voting |

| 6 sec. | 6 sec. | 6 sec. | 6 sec. | 6 sec. |

Fig.9

Europäisches
Patentamt

European
Patent Office

Office européen
des brevets

# EUROPEAN SEARCH REPORT

**Application Number**

EP 10 29 0192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/248784 A1 (HENLEY SHARON A [US] ET AL) 10 November 2005 (2005-11-10) * abstract; figures 8,9 * ----- | 1,2 | INV. H04N1/60 |
| A | MOROVIC J ET AL: "A Universal Algorithm for Colour Gamut Mapping" INTERNET CITATION 27 March 1998 (1998-03-27), XP002194635 Retrieved from the Internet: URL:http://colour.derby.ac.uk/jan/morCIM98 .pdf [retrieved on 2002-03-27] * the whole document * ----- | 1,2,4 | |
| A | EP 1 006 483 A1 (FUJITSU LTD [JP]) 7 June 2000 (2000-06-07) * abstract; figures 3-5,18,29,38,39 * * paragraph [0004] * ----- | 1,2,4 | |
| A | US 7 177 465 B1 (TAKAHIRA MASAYUKI [JP]) 13 February 2007 (2007-02-13) * abstract; figure 11 * ----- | 1,2,4 | TECHNICAL FIELDS SEARCHED (IPC) H04N |
| A | EP 1 995 947 A2 (CANON KK [JP]) 26 November 2008 (2008-11-26) * abstract; figures 9-11 * ----- | 1 | |
| A | EP 2 151 988 A2 (SONY CORP [JP]) 10 February 2010 (2010-02-10) * abstract; figure 9 * ----- | 3 | |

The present search report has been drawn up for all claims

| Place of search | Date of completion of the search | Examiner |
|---|---|---|
| Berlin | 6 September 2010 | Kassow, Harald |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .....................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 29 0192

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2010

| Patent document cited in search report | | | Publication date | Patent family member(s) | | | Publication date |
|---|---|---|---|---|---|---|---|
| US 2005248784 | A1 | | 10-11-2005 | US<br>WO | 2006221396<br>2005109856 | A1<br>A2 | 05-10-2006<br>17-11-2005 |
| EP 1006483 | A1 | | 07-06-2000 | DE<br>DE<br>JP<br>JP<br>US | 69914297<br>69914297<br>3583630<br>2000165692<br>6373595 | D1<br>T2<br>B2<br>A<br>B1 | 26-02-2004<br>01-07-2004<br>04-11-2004<br>16-06-2000<br>16-04-2002 |
| US 7177465 | B1 | | 13-02-2007 | NONE | | | |
| EP 1995947 | A2 | | 26-11-2008 | CN<br>JP<br>US | 101312487<br>2008289092<br>2008291476 | A<br>A<br>A1 | 26-11-2008<br>27-11-2008<br>27-11-2008 |
| EP 2151988 | A2 | | 10-02-2010 | CN<br>JP<br>KR<br>US | 101646010<br>2010041636<br>20100019364<br>2010039443 | A<br>A<br>A<br>A1 | 10-02-2010<br>18-02-2010<br>18-02-2010<br>18-02-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007236761 A

### Non-patent literature cited in the description

- **J. MOROVIC ; M. R. LUO.** The Fundamentals of Gamut Mapping: A Survey. *Journal of Imaging Science and Technology,* 2001, vol. 45/3, 283-290
- **MONTAG E. D. ; FAIRCHILD M. D.** Psychophysical Evaluation of Gamut Mapping Techniques Using Simple Rendered Images and Artificial Gamut Boundaries. *IEEE Trans. Image Processing,* 1997, vol. 6, 977-989
- On the Continuity of Gamut Mapping Algorithms, Color Imaging X: Processing, Hardcopy, and Applications. **P. ZOLLIKER ; M. DATWYLER ; K. SIMON.** Proceedings of the SPIE. 2004, vol. 5667, 220-233
- **R. J. ROLLESTON.** Visualization of colorimetric calibration. *Proceedings of SPIE,* 1993, vol. 1912, 299-309
- **E. D. MONTAG ; M. D. FAIRCHILD ; C. F. CARLSON.** Gamut mapping: Evaluation of chroma clipping techniques for three destination gamuts. *IS&T/SID Sixth Color Imaging Conference,* 1998, 57-61
- **MOROVIC J. ; LUO M. R.** Cross-media Psychophysical Evaluation of Gamut Mapping Algorithms. *Proc. AIC Color 97 Kyoto,* 1997, vol. 2, 594-597